Europäisches Patentamt

European Patent Office

Office européen des brevets

(19)

(11) Numéro de publication : **0 334 913 B1**

## (12) FASCICULE DE BREVET EUROPEEN

(45) Date de publication du fascicule du brevet :
**01.07.92 Bulletin 92/27**

(51) Int. Cl.⁵ : **B23C 3/12**

(21) Numéro de dépôt : **88907707.9**

(22) Date de dépôt : **07.09.88**

(86) Numéro de dépôt international :
**PCT/FR88/00440**

(87) Numéro de publication internationale :
**WO 89/02329 23.03.89 Gazette 89/07**

### (54) MACHINE A CHANFREINER PERFECTIONNEE.

(30) Priorité : **08.09.87 FR 8712433**

(43) Date de publication de la demande :
**04.10.89 Bulletin 89/40**

(45) Mention de la délivrance du brevet :
**01.07.92 Bulletin 92/27**

(84) Etats contractants désignés :
**BE DE GB IT NL**

(56) Documents cités :
**DE-A- 3 340 466**
**DE-C- 122 799**
**DE-C- 3 526 950**

(73) Titulaire : **AEROSPATIALE Société Nationale Industrielle**
**37, Boulevard de Montmorency**
**F-75781 Paris Cédex 16 (FR)**

(72) Inventeur : **GRASSET, Michel Jean Victor Pradel**
**F-44350 Guérande (FR)**

(74) Mandataire : **Barnay, André François**
**Cabinet Barnay 80 rue Saint-Lazare**
**F-75009 Paris (FR)**

Jouve, 18, rue Saint-Denis, 75001 PARIS

EP 0 334 913 B1

## Description

la présente invention est relative aux machines à chanfreiner les tôles, plaques ou panneaux selon le preambule de la revendication 1. D'une façon générale, ces machines à chanfreiner comprennent des moyens d'appui sur la surface de l'ouvrage et de guidage contre le bord à chanfreiner.

On connait actuellement différents modèles de machines à chanfreiner, parmi lesquelles certaines sont légères, mais ne permettent ni la formation de chanfreins sur les bords non rectilignes, ni le réglage de l'angle du chanfrein, qui est fixé la plupart du temps à 45°.

C'est notamment le cas d'une machine à préparer les bords des tôles à raccorder par soudage qui est décrite et représentée dans le document DE-A-3 340 466, du type comprenant un corps comportant des moyens de guidage le long de la tôle à chanfreiner et adaptés pour prendre appui sur le bord de l'ouvrage, des moyens d'appui et de roulement, et une détoureuse à fraise articulée sur le corps de la machine.

Dans un autre modèle de machine, plus lourde, qui travaille par rabotage, on ne peut modifier l'angle du chanfrein qu'en changeant l'outil; en outre l'état de la surface après le rabotage n'est pas satisfaisant, ce qui est inacceptable dans le domaine de la construction aéronautique.

l'invention a pour but de remédier aux inconvénients des machines à chanfreiner actuelles.

Elle a pour objet à cet effet une machine à chanfreiner les tôles, plaques ou panneaux du type comprenant un corps comportant des moyens de guidage le long du bord de l'ouvrage à chanfreiner et adaptés pour prendre appui sur le bord de l'ouvrage, des moyens d'appui et de roulement, et une détoureuse à fraise articulée sur le corps, caractérisée en ce que les moyens de guidage sont constitués par des griffes réglables et en ce que la détoureuse est articulée de manière à osciller dans un plan perpendiculaire au bord de l'ouvrage à chanfreiner de manière à pouvoir régler l'angle du chanfrein et en ce que la fraise est située entre les griffes de guidage.

Suivant un mode de réalisation, lesdits moyens d'appui et de roulement sont constitués par deux paires de galets qui font saillie sur un côté du corps et définissent ensemble un plan.

Suivant une autre caractéristique de l'invention la machine comporte un organe allongé monté coulissant longitudinalement dans le corps entre les axes desdites paires de galets et parallèlement à ces axes, et lesdites griffes sont formées à une extrémité dudit organe.

D'une façon avantageuse, ledit organe est solidaire d'un dispositif de réglage comprenant une vis en prise avec le corps et portant un bouton de manoeuvre.

Suivant un mode de réalisation, il est prévu deux tourillons fixés sur les côtés du corps de part et d'autre dudit organe coulissant portant les griffes et définissant un axe d'articulation pour la détoureuse, perpendiculaire audit organe.

D'une façon avantageuse, la détoureuse est fixée entre deux flasques comportant chacun une ouverture à travers laquelle s'étend l'un desdits tourillons.

Suivant un autre mode de réalisation, le corps est adapté pour chevaucher le bord de l'ouvrage à chanfreiner et comporte à cet effet une fente s'étendant parallèlement audit plan et dans laquelle font saillie lesdits galets, cette fente s'étendant un peu au-delà desdites griffes.

De préférence, la machine comporte des moyens d'indexage de la position angulaire de la détoureuse par rapport au corps.

Ces moyens d'indexage sont constitués par des trous agencés suivant au moins un arc de cercle dans un flasque, par au moins un trou dans la paroi adjacente du corps et par une broche apte à être introduite dans l'un des trous du flasque et du corps.

Lorsque le corps est adapté pour chevaucher le bord de l'ouvrage à chanfreiner, il comporte un galet monté coulissant de façon réglable dans le corps, perpendiculairement à ladite fente, à l'opposé desdites paires de galets.

La description qui va suivre, en regard des dessins annexés à titre d'exemples non limitatifs, permettra de bien comprendre comment l'invention peut être mise en pratique.

La figure 1 est une vue en élévation latérale d'un mode de réalisation d'une machine à chanfreiner suivant l'invention.

La figure 2 est une vue analogue à celle de la figure 1, en coupe partielle, d'un second mode de réalisation.

La figure 3 en est une vue partielle de face.

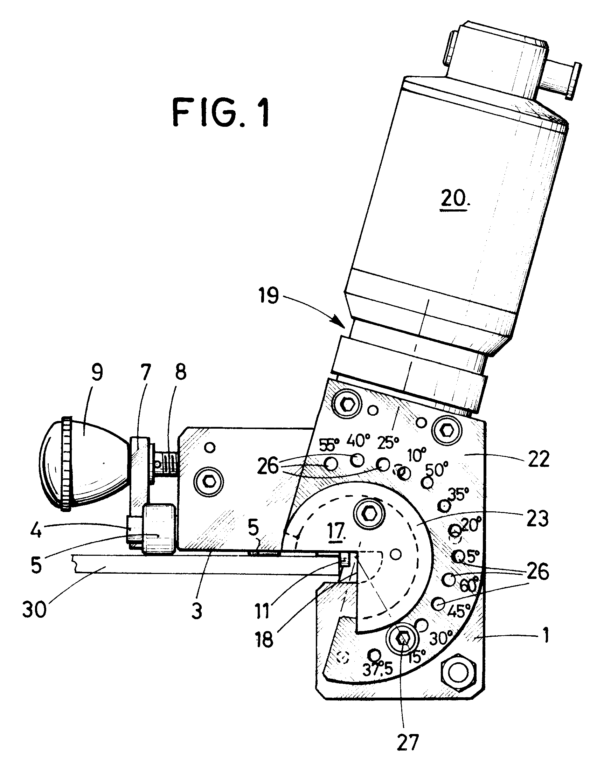

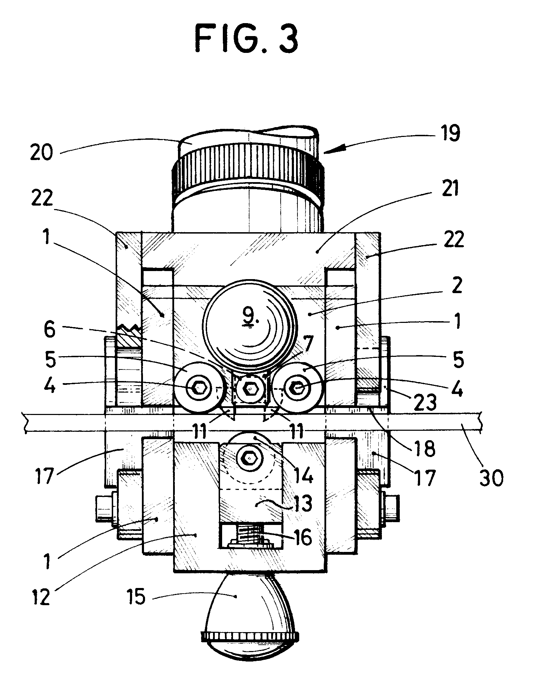

Les modes de réalisation des figures 1, 2 et 3 comportent des organes identiques désignés par les mêmes références.

En se référant aux dessins, la machine à chanfreiner suivant un mode de réalisation de l'invention comprend un corps comportant deux parois latérales 1 parallèles.

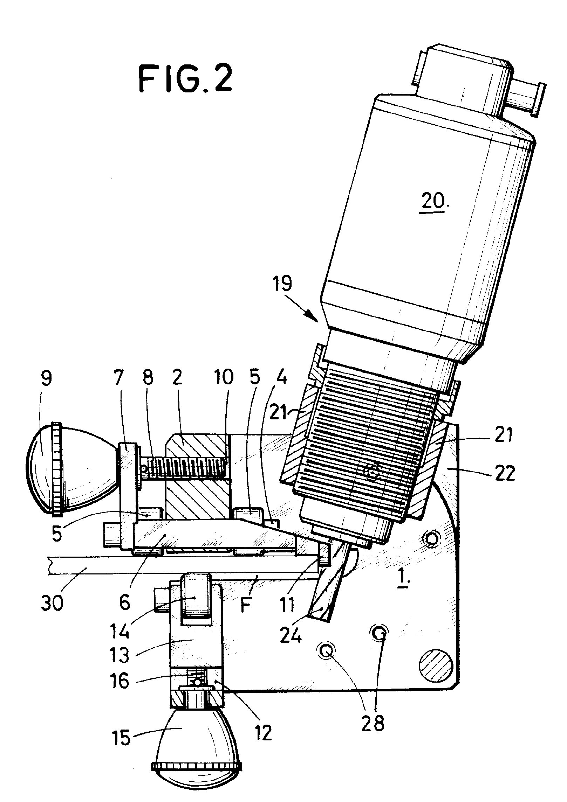

Les deux éléments de parois 1 sont réunis au moyen d'une entretoise 2 (figure 2) dans laquelle sont montés deux axes espacés 4 parallèles aux parois 1 et portant à chaque extrémité un galet 5 faisant légèrement saillie au-delà du bord 3 du corps et définissant ensemble un plan.

Dans l'entretoise 2 entre les axes 4 et à peu près au niveau de ceux-ci est percé un trou traversant parallèle aux axes 4 et dans lequel est monté coulissant un doigt 6 dont une extrémité, à l'extérieur du corps, est solidaire rigidement d'une plaquette perpendiculaire 7 et dans laquelle est montée librement rotative une tige filetée 8 solidaire d'un bouton 9, cette tige 8 étant vissée dans un trou taraudé de l'entroise 2 (figure 2).

L'extrémité opposée du doigt 6 forme deux griffes 11 repliées à angle droit espacées l'une de l'autre et faisant également saillie sur le bord 3 du corps, mais au-delà dudit plan défini par les galets 5.

Grâce à cet agencement, il est possible de faire avancer ou reculer le doigt 6 dans le corps en faisant tourner le bouton 9 dans un sens ou dans l'autre.

Chaque élément de paroi 1 porte en outre un tourillon fixé sur sa face externe et constitué par une plaque circulaire 17 présentant une échancrure 18 délimitée par deux rayons à 90°, ces éléments étant fixés de façon que l'un des rayons soit aligné avec le bord 3 du corps, le second rayon, à angle droit s'étendant transversalement au-delà du bord 3.

Un ensemble 19 comprenant une détoureuse 20 est articulé sur le corps décrit plus haut, autour des tourillons 17.

La détoureuse 20 est montée sur un élément de support, par exemple une douille filetée 21 comme représenté à la figure 2, de part et d'autre de laquelle sont fixés deux flasques 22 parallèles comportant chacun une ouverture semi-circulaire ayant un diamètre égal à celui des tourillons 17 et entourant ceux-ci sur environ les trois quarts de leur circonférence.

D'un façon avantageuse, les flasques 22 sont maintenus contre les éléments de parois 1 par un rebord périphérique radial 23 formé sur les tourillons 17, et l'agencement est tel que la fraise 24 de la détoureuse 20, située dans l'axe de celle-ci, s'étend entre les griffes 11 et au-delà du bord 3 du corps.

Grâce à cet agencement, l'ensemble 19 peut prendre différentes positions angulaires en tournant sur les tourillons 17 et, pour immobiliser cet ensemble, il est avantageusement prévu une série de trous 26 disposés suivant un ou plusieurs arcs de cercles dans l'un des flasques 22, autour d'un tourillon, et un ou plusieurs trous 28 dans l'élément de paroi 1 correspondant, une broche amovible 27 étant engagée dans l'un des trous 26 et dans l'un 28 de la paroi 1, permettant un indexage de la position de l'ensemble 19, facilité par l'indication de la valeur d'un angle de fraisage en face de chaque trou 26.

On a représenté à la figure 2 une variante, dans laquelle le corps de la machine est adapté pour chevaucher l'ouvrage à chanfreiner.

Dans ce but, les parois 1 délimitent une fente F qui s'étend parallèlement au plan défini par les galets, qui font saillie dans cette fente.

De l'autre côté de la fente, les deux éléments 1 sont réunis au moyen d'un bloc 12 formant chape, dans lequel coulisse un support 13 portant un galet 14, dont la position peut être réglée au moyen d'un bouton 15 solidaire d'une tige filetée 16 vissée dans le bloc 12.

On comprend qu'en règlant la position du galet 14 au moyen de la vis 16 et du bouton 15, on peut adapter la largeur de l'intervalle entre ce galet et le plan défini par les galets 5 à l'épaisseur d'un ouvrage 30 à chanfreiner sur le bord duquel on engage la machine suivant l'invention, dont le roulement sur l'ouvrage est stabilisé par l'action simultanée des galets 5 et 14 sur les deux faces de l'ouvrage.

On comprend également que lorsque la machine est engagée en position de chevauchement de l'ouvrage, le bord de celui-ci vient en contact avec les griffes 11.

En conséquence, en faisant tourner la vis 8 au moyen du bouton 9, on peut faire avancer ou reculer ces griffes, ce qui permet de régler la position de la fraise 24 par rapport au bord de l'ouvrage, et ainsi la dimension du chanfrein qui est commencé par fraisage de profil sur le côté du bord à chanfreiner et en faisant rouler la machine sur l'ouvrage, guidée par les griffes 11 glissant sur le bord.

On remarquera que dans le mode de réalisation de la figure 1 l'épaisseur des ouvrages à chanfreiner n'est pratiquement limitée que par la capacité de la détoureuse.

La machine suivant l'invention est légère et par conséquent maniable. La fraise de la détoureuse étant complètement entourée, la machine est également très sûre pour l'utilisateur. Enfin, cette machine permet d'exécuter des chanfreins en forme de V, X, K, Y avec des angles réglables de 0 à 60°.

## Revendications

1. Machine à chanfreiner les tôles, plaques ou panneaux du type comprenant un corps comportant des moyens de guidage le long du bord de l'ouvrage à chanfreiner et adaptés pour prendre appui sur le bord de l'ouvrage, des moyens d'appui et de roulement, et une détoureuse à fraise articulée sur le corps, caractérisée en ce que les moyens de guidage sont constitués par des griffes réglables (11) et en ce que la détoureuse est articulée (17) de manière à osciller dans un plan perpendiculaire au bord de l'ouvrage à chanfreiner de manière à pouvoir régler l'angle du chanfrein et en ce que la fraise (24) est située entre les griffes de guidage (11).

2. Machine suivant la revendication 1, caractérisée en ce que lesdits moyens d'appui et de roulement sont constitués par deux paires de galets (5) qui font saillie sur un côté (3) du corps et définissent ensemble un plan.

3. Machine suivant la revendication 2, caractérisée en ce qu'elle comporte un organe allongé (6) monté coulissant longitudinalement dans le corps entre les axes (4) desdites paires de galets (5) et parallèlement à ces axes, et lesdites griffes (11) sont formées à une extrémité dudit organe (6).

4. Machine suivant la revendication 3, caractérisée en ce que ledit organe (6) est solidaire d'un dispositif de réglage comprenant une vis (8) en prise avec le corps et portant un bouton de manoeuvre (9).

5. Machine suivant l'une quelconque des revendications 1 à 4, caractérisée en ce qu'il est prévu deux tourillons (17) fixés sur les côtés du corps de part et d'autre dudit organe coulissant (6) portant les griffes (11) et définissant un axe d'articulation pour la détoureuse, perpendiculaire audit organe (6).

6. Machine suivant la revendication 5, caractérisée en ce que la détoureuse (20) est fixée entre deux flasques (22) comportant chacun une ouverture à travers laquelle s'étend l'un desdits tourillons (17).

7. Machine suivant l'une quelconque des revendications 1 à 6, caractérisée en ce que le corps est adapté pour chevaucher le bord de l'ouvrage (30) à chanfreiner et comporte à cet effet une fente (F) s'étendant parallèlement audit plan et dans laquelle font saillie lesdits galets (5, 14), cette fente (F) s'étendant un peu au-delà desdites griffes (11).

8. Machine suivant l'une quelconque des revendications 1 à 7, caractérisée en ce qu'elle comporte des moyens (26, 27) d'indexage de la position angulaire de la détoureuse (20) par rapport au corps.

9. Machine suivant la revendication 8, caractérisée en ce que lesdits moyens d'indexage sont constitués par des trous (26) agencés suivant au moins un arc de cercle dans un flasque (22), par au moins un trou (28) dans la paroi (1) adjacente du corps et par une broche (27) apte à être introduite dans l'un des trous du flasque et du corps.

10. Machine suivant la revendication 7, caractérisée en ce que le corps comporte un galet monté coulissant de façon réglable dans le corps, perpendiculairement à ladite fente, à l'opposé desdites paires de galets.

**Patentansprüche**

1. Maschine zur Kantenbearbeitung an Blechen, Platten oder Flächen, bestehend aus einem Körper, der mit Führungsmitteln zur Führung längs des Randes des zu bearbeitenden Werkstücks versehen und zur Anbringung am Rand des Werkstücks eingerichtet ist, der ferner Befestigungs- und Rollmittel sowie eine an dem Körper gelenkig angebrachte Fräsmaschine aufweist, dadurch gekennzeichnet, daß die Führungmittel aus zwei verstellbaren Klauen (11) bestehen, daß die Fräsmaschine in der Weise gelenkig angebracht (17) ist, daß sie in einer zur Kante des zu bearbeitenden Werkstücks senkrechten Ebene derart schwenkbar ist, daß der Winkel der abgefasten Kante eingestellt werden kann und daß der Fräser (24) zwischen den Führungsklauen (11) angeordnet ist.

2. Maschine nach Anspruch 1, dadurch gekennzeichnet, daß die Befestigungs- und Rollmittel von zwei Paaren von Rollen (5) gebildet sind, die an einer Seite (3) des Körpers herausstehen und die zusammen eine Ebene bilden.

3. Maschine nach Anspruch 2, dadurch gekennzeichnet, daß diese ein längliches Teil (6) aufweist, das in Längsrichtung verschiebbar im Körper zwischen den Achsen (4) der Rollenpaare (5) und zu diesen achsenparallel angeordnet ist und daß die Klauen (11) an einem Ende des Teils (6) angeformt sind.

4. Maschine nach Anspruch 3, dadurch gekennzeichnet, daß das Teil (6) an einer Einstellvorrichtung befestigt ist, die eine mit dem Körper verbundene Schraube (8) aufweist und einen Betätigungsknopf (9) trägt.

5. Maschine nach einem der Ansprüche 1 bis 4, dadurch gekennzeichnet, daß zwei Lagerzapfen (17) vorgesehen sind, die an den Seiten des Körpers und beiderseits des die Klauen (11) tragenden, verschiebbaren Teils (6) angebracht sind und eine senkrecht zum Teil (6) verlaufende Drehachse für die Fräsmaschine bilden.

6. Maschine nach Anspruch 5, dadurch gekennzeichnet, daß die Fräsmaschine (20) zwischen zwei Lagerschildern (22) angebracht ist, die jeweils eine Öffnung aufweisen, in die hinein sich einer der Lagerzapfen (17) erstreckt.

7. Maschine nach einem der Anspüche 1 bis 6, dadurch gekennzeichnet, daß der Körper so ausgebildet ist, daß er den Rand des zu bearbeitenden Werkstücks (30) übergreift und dazu einen Spalt (F) besitzt, der sich parallel zur definierten Ebene erstreckt und in den die Rollen (5, 14) hineinragen, wobei der Spalt (F) sich ein wenig jenseits der Klauen (11) erstreckt.

8. Maschine nach einem der Ansprüche 1 bis 7, dadurch gekennzeichnet, daß sie Einrichtungen (26, 27) zur Positionierung der Winkellage der Fräsmaschine (20) relativ zum Körper aufweist.

9. Maschine nach Anspruch 8, dadurch gekennzeichnet, daß die obigen Einrichtungen zur Positionierung gebildet sind von Löchern (26), die wenigstens gemäß eines Kreisbogens in einem Lagerschild (22) angeordnet sind, von mindestens einem Loch (28) in der an den Körper anliegenden Seitenwand (1) und von einem Dorn (27), der dazu vorgesehen ist, zugleich in eines der Löcher des Lagerschilds und der Seitenwand des Körpers eingesetzt zu werden.

10. Maschine nach Anspruch 7, dadurch gekennzeichnet, daß der Körper mit einer Rolle versehen ist, die am Körper in einstellbarer Weise verschiebbar und senkrecht zum Spalt den Rollenpaaren gegenüberstehend angeordnet ist.

**Claims**

1. Machine for chamfering sheets, plates or panels of the type comprising a body having means for guiding it along the edge of the workpiece which is to be chamfered and designed to engage the edge of the workpiece, means for engaging and rolling, and a rotary milling tool articulated on the body, characterised in that the guiding means are constituted by adjustable claws (11) and in that the rotary tool is articulated (17) such as to swing in a plane perpendicular to the edge of the workpiece to be chamfered, in a manner such as to allow adjustment of the angle of the chamfer, and in that the milling tool (24) is situated between the guiding claws (11).

2. Machine according to claim 1, characterised in that the said means for engaging and rolling are constituted by two pairs of rollers (5) which protrude on one face (3) of the body and together define a plane.

3. Machine according to claim 2, characterised in that it has an elongated member (6) mounted to slide longitudinally in the body between the spindles (4) of the said pairs of rollers (5) and parallel to these spindles, and the said claws (11) are formed on one end of the said member (6).

4. Machine according to claim 3, characterised in that the said member (6) is rigidly connected to an adjusting means comprising a screw (8) engaging the body and carrying an adjusting knob (9).

5. Machine according to one of claims 1 to 4, characterised in that there are provided two trunnions (17) secured on the sides of the body on one side and the other of the said sliding member (6) carrying the claws (11), and defining an axis of articulation of the rotary tool, perpendicular to the said member (6).

6. Machine according to claim 5, characterised in that the rotary tool (20) is secured between two cheeks (22) each having an opening through which extends one of the said trunnions (17).

7. Machine according to one of claims 1 to 6, characterised in that the body is designed to overlap the edge of he workpiece (30) to be chamfered and for this purpose has a slot (F) extending parallel to the said plane and into which protrude the said rollers (5, 14), this slot (F) extending slightly beyond the said claws (11).

8. Machine according to claims 1 to 7, characterised in that it has means (26, 27) for indexing the angular position of the rotary tool (20) whith respect to the body.

9. Machine according to claim 8, characterised in that the said indexing means are constituted by holes (26) arranged on at least one circular arc in one cheek (22), by at least one hole (28) in the adjacent wall (1) of the body and by a peg (27) designed to be introduced into one of the holes in the cheek and the body.

10. Machine according to claim 7, characterised in that the body has a roller mounted to slide in an adjustable manner in the body perpendicular to the said slot and opposite the said pairs of rollers.

# FIG. 1

# FIG.2

# FIG. 3